(19) 

Europäisches
Patentamt
European
Patent Office
Office européen
des brevets

(11) **EP 4 748 952 A1**

(12) **EUROPEAN PATENT APPLICATION**
published in accordance with Art. 153(4) EPC

(43) Date of publication:
**27.05.2026 Bulletin 2026/22**

(51) International Patent Classification (IPC):
*C22B 34/12* (2006.01)   *C22B 7/00* (2006.01)
*C22B 9/10* (2006.01)

(21) Application number: **24842786.6**

(22) Date of filing: **15.04.2024**

(52) Cooperative Patent Classification (CPC):
**Y02P 10/20**

(86) International application number:
**PCT/JP2024/015012**

(87) International publication number:
**WO 2025/017986 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.07.2023 JP 2023117129**

(71) Applicant: **The Foundation for the Promotion of
Industrial
Science
Tokyo 153-8505 (JP)**

(72) Inventors:
• **OKABE Toru
Tokyo 113-8654 (JP)**
• **KAMIMURA Gen
Tokyo 113-8654 (JP)**
• **IKEDA Takashi
Tokyo 113-8654 (JP)**
• **OUCHI Takanari
Tokyo 113-8654 (JP)**

(74) Representative: **Carpmaels & Ransford LLP
One Southampton Row
London WC1B 5HA (GB)**

(54) **METHOD FOR TITANIUM OR TITANIUM ALLOY PRODUCTION**

(57)     Provided is a method for producing titanium or a titanium alloy, in which titanium or a titanium alloy is melted and reacted in combination with a rare earth metal and a rare earth metal halide salt to produce titanium or a titanium alloy with an oxygen concentration of 0.1% by mass (1000 mass ppm) or less.

FIG. 1

EP 4 748 952 A1

**Description**

TECHNICAL FIELD

The present invention relates to a method for producing titanium or titanium alloy.

Priority is claimed on Japanese Patent Application No. 2023-117129, filed July 18, 2023, the content of which is incorporated herein by reference.

BACKGROUND ART

Titanium (Ti) and its alloy containing titanium as a main component (titanium alloy) have the highest specific strength and excellent corrosion resistance among metal materials. Although titanium is an inexhaustible resource, the main reason why titanium and titanium alloys are not widely used is that titanium has a high affinity for oxygen, and smelting, melting, and casting are difficult, and the production cost of a titanium product is high.

Currently, in a conventional method, a titanium ore ($TiO_2$, $FeTiO_x$) is chlorinated in a reducing atmosphere in which carbon coexists, converted into a chloride ($TiCl_4$) that does not contain oxygen. The purified chloride is reduced with metallic magnesium (Mg) to produce metallic titanium having a low oxygen concentration of 0.05% by mass (500 mass ppm) or less. In the industrial chloride process for titanium production, the cost is high, an environmental load is large, and a large amount of $CO_2$ gas is generated. To realize a mass production of titanium, there is a demand for the development of a revolutionary smelting method.

However, currently, a method for efficiently removing oxygen from a titanium ore and metallic titanium to a low concentration (to 500 mass ppm) without undergoing chloride formation has not been established, and the mass production of titanium has not been realized.

For example, a reduction reaction of a titanium oxide ($TiO_2$) with aluminum (Al) or magnesium is able to convert the titanium oxide directly into metallic titanium. However, since a crude titanium alloy in which a titanium oxide is reduced with aluminum (aluminothermic reduction-Ti (ATR-Ti)) and crude titanium in which a titanium oxide is reduced with magnesium (magnesiothermic reduction-Ti (MTR-Ti)) contain a large amount of oxygen as impurities, the crude titanium alloy and the crude titanium cannot be used industrially as structural material.

The present inventors have developed a technique of producing titanium having an extremely low oxygen concentration of 0.01% by mass (100 mass ppm) or less by directly removing oxygen from titanium by reacting a rare earth metal such as yttrium (Y) and a rare earth metal chloride with oxygen present in solid titanium at approximately 1000°C for 24 to 48 hours (refer to Non Patent Document 1).

According to the method described in Non Patent Document 1, in a case of relatively thin scraps having a thickness of several millimeters, oxygen in the scraps can be efficiently removed, and thus recycling of titanium scraps with a high oxygen concentration is possible. However, since diffusion of oxygen in solid titanium is the rate-limiting step of the method, there is a problem in that a reaction time required for removing oxygen inside the solid titanium is significantly long, and the method cannot be used for ingots of titanium having a relatively large size.

In addition, in a case where the method described in Non-Patent Document 1 is used for an ingot of a titanium alloy containing a large amount of oxygen such as ATR-Ti or MTR-Ti, it takes a long time to remove oxygen present inside the ingot. Therefore, it is difficult to mass-produce titanium with a low oxygen concentration for structural material applications from ATR-Ti or MTR-Ti by using the method described in Non-Patent Document 1.

To directly remove oxygen in the ingot in a short time from an ingot of titanium or titanium alloy having a relatively large size, it is desirable to handle titanium or titanium alloy in a liquid form.

A heating method using a high-frequency induction heating apparatus, a plasma arc melting apparatus, an electron beam melting apparatus, or the like is effective for melting titanium. In particular, in a case where the high-frequency induction heating apparatus is used, since a molten metal is well mixed, it is possible to produce homogeneous titanium or titanium alloy. However, since the molten titanium exhibits extremely high reactivity with oxygen, it is challenging to directly remove impurity oxygen from the molten titanium or the molten titanium alloy in a melting step.

For example, a method of removing oxygen in titanium by adding a rare earth metal and a calcium fluoride ($CaF_2$) in a case where titanium is melted by a cold crucible type levitation melting apparatus, which is one of high-frequency induction heating apparatuses, is known (refer to Patent Document 1). According to the method described in Patent Document 1, by adding cerium (Ce) of a rare earth metal or misch metal which is a mixture of rare earth metals to molten titanium, oxygen can be removed from the molten titanium up to 0.5% by mass (5000 mass ppm). However, in the method described in Patent Document 1, oxygen cannot be removed down to the oxygen concentration level required for structural material applications, which is 0.1% by mass to 0.2% by mass (1000 to 2000 mass ppm).

In addition, even in a case where the method described in Patent Document 1 is used for a molten titanium alloy such as ATR-Ti or MTR-Ti, oxygen cannot be removed down to 0.1% by mass to 0.2% by mass (1000 to 2000 mass ppm). Therefore, it is difficult to produce the titanium with low oxygen concentration for the structural material applications from ATR-Ti or MTR-Ti by using the method described in Patent Document 1.

In addition, a method of removing oxygen in a Ti-46Al-8Nb alloy by adding yttrium (Y), a rare earth metal, and a calcium fluoride in a case of melting alloy with a cold crucible type melting apparatus, which is one of high-frequency induction heating apparatuses, is known (refer to Non Patent Document 2). According to the method described in Non Patent Document 2, oxygen can be removed from molten Ti-46Al-8Nb alloy down to 0.08% by mass (800 mass ppm). However, a titanium alloy containing a large amount of aluminum is thermodynamically likely to remove oxygen, and in the method described in Non-Patent Document 2, oxygen cannot be removed from a melt of pure titanium or a titanium alloy having a low aluminum concentration to a level of an oxygen concentration of 0.1% by mass to 0.2% by mass (1000 to 2000 mass ppm), which is required for structural material applications.

Further, a method of removing oxygen in an alloy by melting a titanium-aluminum-based alloy containing 40% by mass or more of aluminum by an arc melting method, a plasma arc melting method, or an induction melting method using a water-cooled copper container is known (refer to Patent Document 2). According to the method described in Patent Document 2, oxygen can be removed from the molten titanium-aluminum-based alloy down to 0.022% by mass (220 mass ppm). However, the method described in Patent Document 2 is effective only for a titanium-aluminum alloy containing 40% by mass or more of aluminum concentration, and oxygen cannot be removed to a concentration of 0.6% by mass (6000 mass ppm) or less for a titanium-aluminum-based alloy containing 40% by mass or less of aluminum concentration and 60 by mass or more of titanium.

Citation List

Patent Documents

Patent Document 1: Japanese Patent No. 2949222
Patent Document 2: Japanese Unexamined Patent Application, First Publication No. 2016-135907

Non Patent Documents

Non-Patent Document 1: 'Ultimate Deoxidation Method of Titanium Utilizing Y/YOCl/YCl3 Equilibrium', Akihiro Iizuka, Takanari Ouchi, and Toru H. Okabe: Metall. Mater. Trans. B, vol. 51 (2020) pp. 433-442. DOI:10.1007/s 11663-019-01742-6
Non-Patent Document 2: 'Direct oxygen removal from titanium aluminide scraps by yttrium reduction', Li-na JIAO, Qi-sheng FENG, Shi-yu HE, Bao-hua DUAN, Zhi-he DOU, Chong-he LI, and Xiong-gang LU: Trans. Nonferrous Met. Soc. China, vol. 32 (2022) pp. 2428-2437. DOI: 10.1016/S1003-6326(22)65958-2

SUMMARY OF INVENTION

Technical Problem

The present invention has been made in view of the above-described problems, and an object of the present invention is to provide a method for producing titanium or a titanium alloy having a low oxygen concentration by directly removing impurity oxygen from molten titanium or titanium alloy to a low concentration of 0.1% by mass (1000 mass ppm) or less.

Solution to Problem

(1) According to one aspect of the present invention, there is provided a method for producing titanium (Ti) or a titanium alloy, in which titanium or a titanium alloy is melted and reacted in combination with a rare earth metal and a rare earth metal halide salt to produce titanium or a titanium alloy having an oxygen concentration of 0.1% by mass (1000 mass ppm) or less.
(2) According to another aspect of the present invention, there is provided a method for producing titanium or a titanium alloy, in which impurity oxygen in molten titanium or a molten titanium alloy is directly removed by using deoxidation ability of a rare earth metal and a formation reaction of a rare earth metal oxyhalide to produce titanium or a titanium alloy having a low oxygen concentration.

(3) In the method according to (1) or (2), the titanium alloy may be an alloy having a titanium concentration of 65% by mass or more.

(4) In the method according to any one of (1) to (3), one or more rare earth metals selected from yttrium (Y), cerium (Ce), and lanthanum (La), and one or more rare earth metal halide salts selected from an yttrium fluoride ($YF_3$), a cerium fluoride ($CeF_3$), and a lanthanum fluoride ($LaF_3$) may be used.

(5) In the method according to any one of (1) to (4), a flux of a metal halide salt may be used along with the rare earth metal and the rare earth metal halide salt.

(6) In the method according to any one of (1) to (5), titanium or a titanium alloy, which is produced by reducing a titanium oxide with aluminum (Al) or magnesium (Mg) and contains a large amount of impurity oxygen, may be used as a titanium raw material.

(7) In the method according to any one of (1) to (5), titanium or a titanium alloy, which is produced by reducing a titanium oxide with a rare earth metal or a rare earth metal alloy and contains a large amount of impurity oxygen, may be used as a titanium raw material.

(8) In the method according to any one of (1) to (5), scraps of titanium or a titanium alloy may be used as a titanium raw material.

(9) In the method according to any one of (1), (4), or (5), the titanium and the titanium alloy may be melted by using a metal halide salt that lowers a melting point of a rare earth metal halide salt along with the rare earth metal.

(10) In the method according to any one of (1) to (9), an addition amount of the rare earth metal may be adjusted to control an oxygen concentration in titanium.

(11) In the method according to any one of (1) to (8), the titanium and the titanium alloy are melted along with the rare earth metal and the rare earth metal halide salt in an inert atmosphere by using a melting apparatus selected from a high-frequency induction heating apparatus, a plasma arc melting apparatus, and an electron beam melting apparatus.

(12) In the method according to (11), a cold crucible induction melting furnace is used as the high-frequency induction heating apparatus, and heat-resistant adhesives are applied to slits of a crucible of the cold crucible induction melting furnace to prevent adhesion between the rare earth metal halide salt or the flux, and the crucible. Advantageous Effects of Invention

According to the aspects of the present invention, there is provided a method of directly removing impurity oxygen from molten titanium or a titanium alloy to produce titanium or a titanium alloy having a low oxygen concentration.

BRIEF DESCRIPTION OF DRAWINGS

FIG. 1 is a process diagram showing a method for producing titanium or a titanium alloy from a titanium oxide according to an embodiment.

FIG. 2 is an example of a process diagram of a method of directly producing titanium or a titanium alloy having a low oxygen concentration from scraps of titanium or a titanium alloy according to the embodiment.

FIG. 3 is a $Y_2O_3$-$YF_3$ pseudo-binary phase diagram.

FIG. 4 is an isothermal chemical potential diagram of yttrium-oxygen-fluorine at 1727°C.

FIG. 5 shows a thermodynamic relationship between an equilibrium oxygen partial pressure and an equilibrium oxygen concentration in titanium in various deoxidation reaction systems.

FIG. 6 shows an equilibrium oxygen concentration in titanium by each deoxidation reaction system in a titanium-oxygen binary phase diagram.

FIG. 7 is an overall view of a melting apparatus of titanium or a titanium alloy according to an example.

FIG. 8 is a schematic cross-sectional view of a metal sample in a cold crucible induction melting furnace which is obtained after melting and cooling.

FIG. 9 is a photograph of a titanium sample in a water-cooled copper crucible, which is obtained by directly removing oxygen from molten titanium by using the cold crucible induction melting furnace, and cooling and solidifying the molten titanium in Example 1 of Table 1.

FIG. 10 is a photograph (side appearance) of the titanium sample taken out from the water-cooled copper crucible after directly removing oxygen from the molten titanium by using the cold crucible induction melting furnace, and cooling and solidifying the molten titanium in Example 1 of Table 1.

FIG. 11 is a photograph showing an upper surface of the titanium sample shown in FIG. 10 in Example 1 of Table 1.

FIG. 12 is a photograph showing a titanium sample piece for analysis which is cut out from the obtained titanium sample in Example 1 of Table 1.

FIG. 13 is a photograph showing a titanium sample piece for analysis which is cut out from the obtained titanium sample in Example 2 of Table 1.

FIG. 14 is a photograph showing a titanium sample piece for analysis which is cut out from the obtained titanium sample in Example 8 of Table 1.

FIG. 15 is an X-ray diffraction measurement result of an yttrium fluoride ($YF_3$) flux used for deoxidation of the titanium sample.

FIG. 16 is an X-ray diffraction measurement result of an yttrium fluoride ($YF_3$) flux used for deoxidation of the titanium sample.

FIG. 17 is a scanning electron micrograph of an yttrium fluoride ($YF_3$) flux used for deoxidation of the titanium sample.

FIG. 18 is an example of a conceptual diagram of a new titanium smelting method of producing titanium or a titanium alloy directly from a titanium oxide by using the production method of the embodiment.

## DESCRIPTION OF EMBODIMENTS

Hereinafter, embodiments of the present invention will be described with reference to the drawings.

A production method of the present embodiment has a basic content in which titanium or a titanium alloy containing oxygen, which is melted by using a high-frequency induction apparatus as a melting apparatus, is reacted with a rare earth metal and a rare earth metal halide salt, and oxygen is directly removed from the resultant molten titanium or titanium alloy to a low concentration by using formation of a rare earth metal oxyhalide, thereby producing titanium or a titanium alloy having a low oxygen concentration.

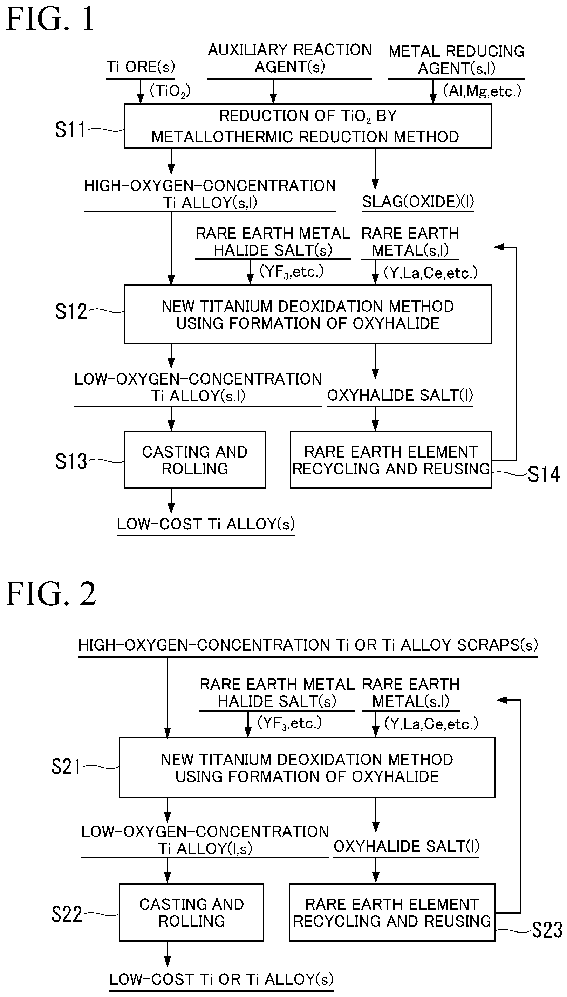

FIG. 1 is a process diagram showing a method of producing titanium or a titanium alloy from a titanium oxide according to an embodiment. As shown in FIG. 1, the method for producing titanium or a titanium alloy developed by the present invention mainly includes three steps (a first step S11 to a third step S13).

First step S11: First, the titanium oxide is reduced with aluminum, magnesium, or the like to produce titanium or a titanium alloy. As the titanium oxide, a titanium ore or a titanium oxide produced from the titanium ore can be used. In the first step, a calcium fluoride ($CaF_2$) or the like is added as an auxiliary reaction agent (flux) to absorb an aluminum oxide or a magnesium oxide, which is a product of the reduction reaction, into the auxiliary reaction agent. As the flux, a metal halide salt other than a calcium fluoride may be used.

Second step S12: Since the titanium or titanium alloy obtained in the first step contains a large amount of impurity oxygen, the titanium or titanium alloy containing impurities is melted, and a rare earth metal and an auxiliary reaction agent is added thereto to remove oxygen. In the second step, a rare earth metal halide salt is added as the auxiliary reaction agent to convert a rare earth metal oxide, which is a product of the above reaction, into a rare earth metal oxyhalide. Furthermore, a metal halide salt that lowers a melting point of the halide salt melt may be used.

Third step S13: Finally, casting and rolling of the molten titanium or titanium alloy having a low oxygen concentration, which is obtained in the second step, are performed.

Fourth step S14: The rare earth metal oxyhalide, which is the reaction product of the second step S12, can be reused as the rare earth metal used in the second step S12 by a rare earth metal separation and recovery process.

FIG. 2 is a process diagram showing a production method of another embodiment. FIG. 2 is an example of a process diagram of a method of directly producing titanium or a titanium alloy having a low oxygen concentration from scraps of the titanium or titanium alloy. The production method shown in FIG. 2 includes a first step S21 to a third step S23.

In the first step S21, a rare earth metal and an auxiliary reaction agent containing a rare earth metal halide salt are added to scraps of titanium or a titanium alloy to remove oxygen.

In the second step S22, casting and rolling of molten titanium or titanium alloy having a low oxygen concentration, which is obtained in the first step S21, are performed.

In the third step S23, the rare earth metal is recovered from the rare earth metal oxyhalide generated in the first step S21, and is used as the rare earth metal to be reused in the first step S21.

As shown in FIG. 2, by using the production method of titanium or a titanium alloy according to the present embodiment, it is possible to directly produce titanium or a titanium alloy having a low oxygen concentration from scraps containing a large amount of impurity oxygen.

Hereinafter, the principle of directly producing titanium or a titanium alloy having a low oxygen concentration from the molten titanium or titanium alloy by using an oxygen removal method using the formation reaction of a rare earth metal oxyhalide of the embodiment will be described.

The method of removing oxygen from the molten titanium or titanium alloy according to the embodiment has a characteristic in that titanium or a titanium alloy containing oxygen, a rare earth metal, and a rare earth metal halide salt are melted in an inert atmosphere in a high-frequency induction apparatus such as a cold crucible induction melting furnace, the resultant molten titanium or titanium alloy is held for approximately 10 to 20 minutes, and oxygen (O) in the molten titanium or titanium alloy is reacted with a rare earth metal (RE (Y, La, Ce, or the like)) and a rare earth metal halide salt ($REX_3$ ($REF_3$ or the like)) [refer to Formula (1)].

$$O \text{ (in Ti)} + 2/3 \, RE \, (l) + 1/3 \, REX_3 \, (l) \rightarrow REOX \, (s) \ldots (1)$$

RE: rare earth metal element such as Y, La, or Ce
X: halogen element such as Cl or F

In a step of removing oxygen from the molten titanium or titanium alloy according to the embodiment, by adding the rare earth metal halide salt, a rare earth metal oxyhalide (REOX) is generated through a reaction of Formula (1). A deoxidation reaction of titanium, which is the basis of the production method of the present embodiment, uses deoxidation ability of the rare earth metal and a formation reaction of the rare earth metal oxyhalide. The method is not limited to the method using the rare earth metal halide salt $REX_3$ as long as the rare earth metal oxyhalide can be formed. For example, by holding a rare earth metal and a metal halide salt such as $CaF_2$ stable at a high temperature under conditions for the formation of a rare earth metal oxyhalide, it is also possible to form the rare earth metal oxyhalide in situ to promote deoxidation of titanium.

As representative examples of the rare earth metal and the halide salt according to the embodiment, deoxidation limits in the deoxidation reaction of the molten titanium using both yttrium (Y) and a fluoride were examined based on thermodynamics. In a case where yttrium and an yttrium fluoride ($YF_3$) are used in Formula (1), an yttrium oxyfluoride (YOF) is generated, and yttrium/yttrium oxyfluoride/yttrium fluoride equilibrium ($Y/YOF/YF_3$ equilibrium) is established.

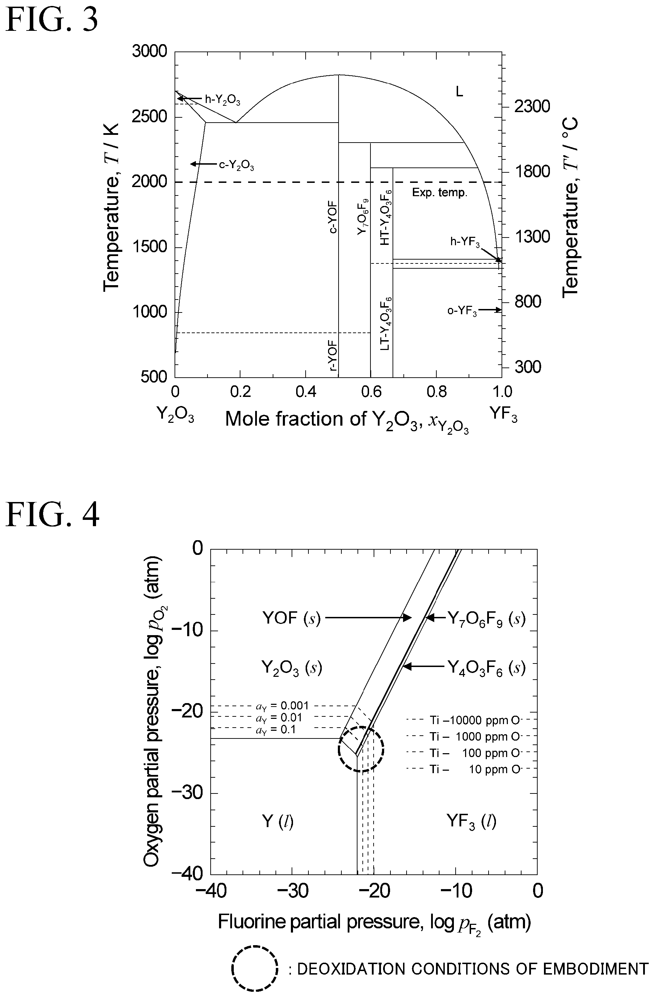

FIG. 3 is a $Y_2O_3$-$YF_3$ pseudo-binary phase diagram (source: 'Phase diagram study and thermodynamic assessment of the $Y_2O_3$-$YF_3$ system', Seungjoo Baek and In-Ho Jung: J. Eur. Ceram. Soc., vol. 42 (2022) pp. 5079-5092. DOI: 10.1016/j.jeurceramsoc.2022.05.005). A dotted line shown in the drawing indicates a temperature condition of the present embodiment. At a temperature higher than the melting point of titanium, an yttrium oxyfluoride ($Y_xO_yF_z$) phase can thermodynamically coexist with an $YF_3$ phase, whereas an yttrium oxide ($Y_2O_3$) phase cannot thermodynamically coexist with the $YF_3$ phase. Therefore, in a system in which $YF_3$ is excessively present, a deoxidation product in the deoxidation of titanium using yttrium is an yttrium oxyfluoride ($Y_xO_yF_z$), and the deoxidation reaction of Formula (1) proceeds.

FIG. 4 is an isothermal chemical potential diagram of yttrium-oxygen-fluorine at 1727°C. A round mark shown in the drawing is a condition of the present embodiment, and impurity oxygen in titanium or a titanium alloy is removed under a condition in which a $Y/YOF/YF_3$ equilibrium is established.

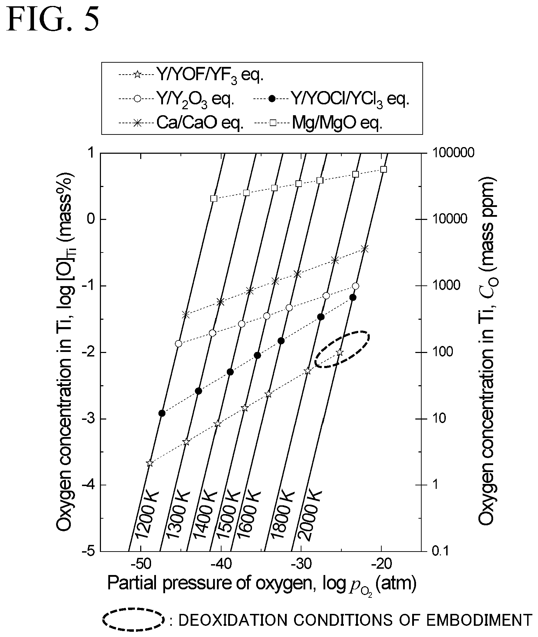

FIG. 5 shows a thermodynamic relationship between an equilibrium oxygen partial pressure and an equilibrium oxygen concentration in titanium in various deoxidation reaction systems. The $Y/YOE/YF_3$ equilibrium and a temperature shown in an elliptical region in the drawing are main conditions of the present embodiment. It can be seen that, in principle, oxygen in titanium can be reduced to a level of 0.01% by mass (100 mass ppm) by using the $Y/YOF/YF_3$ equilibrium.

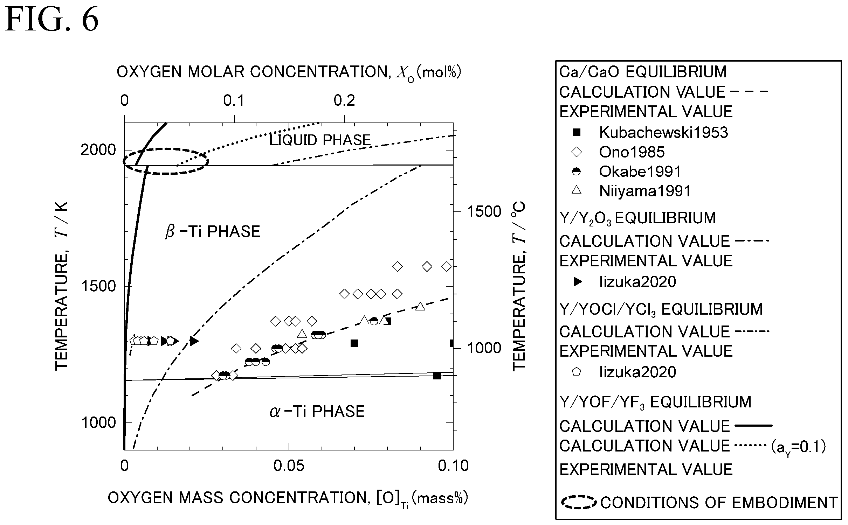

FIG. 6 shows an equilibrium oxygen concentration in titanium by each deoxidation reaction system in a titanium-oxygen binary phase diagram. From the drawing, it is thermodynamically expected that, in a case where the $Y/YOF/YF_3$ equilibrium is used, titanium having a low oxygen concentration of less than 0.1% by mass (1000 mass ppm) is obtained.

In the present embodiment, it has been found that, in principle, the impurity oxygen can be directly removed from molten titanium by using a formation reaction of a rare earth metal oxyhalide (REOX). However, thermodynamic stability of the rare earth metal oxyhalide (REOX) at a high temperature is largely unknown, and the above-described calculation prediction has a large uncertainty. Since an actual deoxidation limit of titanium needs to be measured by an experiment, effectiveness thereof was verified as shown in Examples described later.

In the method described in Patent Document 1, a rare earth metal halide salt is not added. In this case, a rare earth metal oxide ($RE_2O_3$) is formed by a reaction between oxygen in titanium and a titanium alloy and a rare earth metal. On the other hand, in the present embodiment in which the rare earth metal halide salt ($REX_3$) is added, the rare earth metal oxide is thermodynamically unstable due to a reaction between the formed rare earth metal oxide and the rare earth metal halide salt, and a rare earth metal oxyhalide (REOX) is formed. As described above, in the present embodiment, since chemical activity (activity) of the rare earth metal oxide is reduced, the oxygen removal ability is high from a chemical thermodynamic point of view and it is possible to produce titanium or a titanium alloy having a lower oxygen concentration.

In the production method according to the embodiment, the titanium or titanium alloy containing impurity oxygen, which is used as a titanium raw material in the deoxidation step, may be not only ATR-Ti or MTR-Ti but also scraps generated in a machining step of a titanium ingot or scraps of titanium contained in a used product. Alternatively, as the titanium raw material, titanium or a titanium alloy containing a large amount of impurity oxygen, which is produced by reducing a titanium oxide with a rare earth metal or a rare earth metal alloy, may be used. The titanium alloy contains, for example, an alloy element such as aluminum or vanadium.

In the production method according to the present embodiment, an alloy having a titanium mass concentration of 65% or more can be used as the titanium alloy of the raw material. It is difficult to remove impurity oxygen in a titanium alloy with a high titanium concentration, and a titanium alloy having a low oxygen concentration cannot be obtained by a purification method in the related art. On the other hand, according to the production method of the present embodiment, even in a case where a titanium alloy containing 65% by mass or more of titanium is used as a raw material, impurity oxygen can be directly removed from a molten titanium alloy, and a titanium alloy with a low oxygen concentration can be produced.

As the rare earth metal used in the deoxidation reaction of the production method of the embodiment, for example, it is preferable to use one or more selected from yttrium (Y), lanthanum (La), and cerium (Ce). In addition, it is also possible to add a misch metal that is a mixture of these. Other rare earth metals other than these rare earth metals can also be used. However, in recent years, with an increase in production of neodymium (Nd), dysprosium (Dy), terbium (Tb), and the like, which are raw materials of magnets, the supply of Y, La, and Ce, which are produced at the same time as the raw materials, is excessive as by-products. Therefore, from the viewpoint of economic rationality and resource utilization, it is preferable to use by-product rare earth metals such as Y, La, and Ce.

As the rare earth metal halide salt used in the deoxidation reaction of the production method of the embodiment, a fluoride of Y, La, Ce, or the like can be used. The rare earth metal fluoride is preferably used since the rare earth metal fluoride is stably present as a liquid even at a high temperature of 1,700°C or higher at which titanium or a titanium alloy is melted. A rare earth metal constituting the rare earth metal halide salt and a rare earth metal added to the titanium raw material may be rare earth metals of different kinds from each other. For example, a cerium fluoride ($CeF_3$) and yttrium (Y) may be used in combination.

Examples

Hereinafter, the present invention will be described in more detail with reference to examples. However, the present invention is not limited to the following examples.

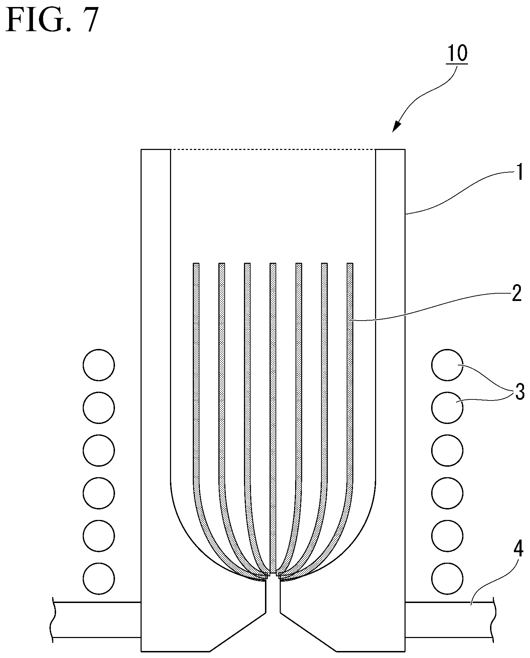

FIG. 7 is an overall view of a melting apparatus of titanium or a titanium alloy according to the examples.

The melting apparatus shown in FIG. 7 is a cold crucible induction melting furnace which is a kind of high-frequency induction heating apparatus. A cold crucible induction melting furnace 10 of the present example includes a crucible 1, an induction coil 3 disposed on an outer periphery of the crucible 1, and a water cooling mechanism 4 that cools the crucible 1. The crucible 1 is a bottomed cylindrical heat-resistant container in which an upper side is opened and which includes a bottom wall at a lower portion. A plurality of slits (not shown) extending in a vertical direction are provided in a side wall of the crucible 1. The induction coil 3 is disposed to surround an outer peripheral surface of the lower portion of the crucible 1. A high-frequency power supply (not shown) is coupled to the induction coil 3. Slits in an inner surface of the crucible 1 are coated with a heat-resistant adhesive 2. By applying a heat-resistant adhesive 2, it is possible to suppress adhesion of a metal sample and a flux in the crucible 1, and an inner wall surface of the crucible 1. As a result, it is easy to take out the metal sample after deoxidation. In a case of the present example, the heat-resistant adhesive 2 is applied along the slits from a lower end of the slits to an upper side. An upper end position of the applied heat-resistant adhesive 2 is positioned above an installation range of the induction coil 3.

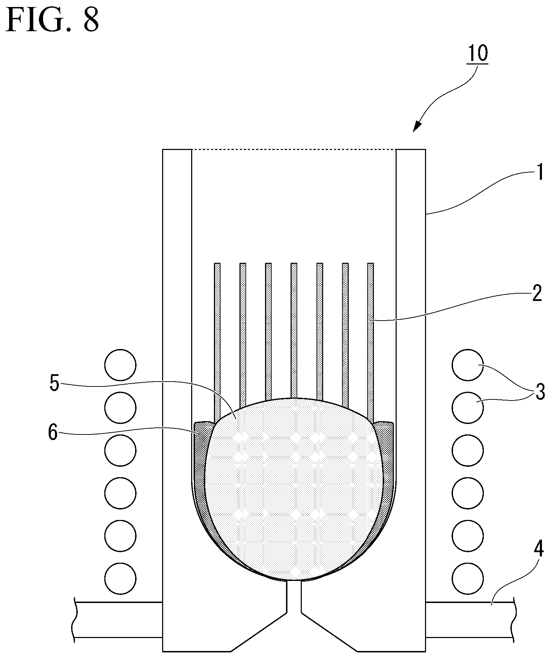

FIG. 8 is a schematic cross-sectional view of a metal sample in the cold crucible induction melting furnace which is obtained after melting and cooling. A metal sample 5 is positioned at the center of a bottom portion of the crucible 1, and a flux 6 is positioned between the metal sample 5 and the inner wall surface of the crucible 1.

A lump of a metallic titanium taken out after cooling was sliced into small pieces, and concentrations of oxygen, nitrogen, and rare earth metals were quantified.

After melting, the concentrations of oxygen and nitrogen in the obtained metallic titanium sample after cooling are shown in Table 1 in combination with melting experimental conditions.

[Table 1]

| | Ti (g) | Y (g) | La (g) | Ce (g) | $YF_3$ (g) | $LaF_3$ (g) | $CeF_3$ (g) | $CaF_2$ (g) | $TiO_2$ (g) | O (mass ppm) | N (mass ppm) |
|---|---|---|---|---|---|---|---|---|---|---|---|
| Example 1 | 350 | 12 | | | 110 | | | | | 170, 220, 110, 120, 140, 230, 110, 120, 190, 120 | 140, 140, 130, 120, 130, 150, 140, 120, 140, 150 |
| Example 2 | 350 | 1.6 | | | 110 | | | | | 600, 580, 620, 580, 600 | 100, 100, 100, 70, 110 |
| Example 3 | 350 | 65 | | | 110 | | | | | 870, 1300, 920, 1100 | 300, 300, 340, 310 |
| Example 4 | 350 | 65 | | | 110 | | | | | 680, 590, 760, 1100 | 180, 200, 210, 220 |

(continued)

|  | Ti (g) | Y (g) | La (g) | Ce (g) | YF$_3$ (g) | LaF$_3$ (g) | CeF$_3$ (g) | CaF$_2$ (g) | TiO$_2$ (g) | O (mass ppm) | N (mass ppm) |
|---|---|---|---|---|---|---|---|---|---|---|---|
| Example 5 | 350 | 65 |  |  | 110 |  |  |  |  | 750, 920, 850, 730, 730 | 180, 180, 190, 180, 170 |
| Example 6 | 350 | 65 |  |  | 110 |  |  |  | 9.0 | 930, 850, 940, 700, 820, 820, 870, 790, 820 | 210, 220, 220, 180, 210, 180, 210, 210, 210 |
| Example 7 | 350 | 65 |  |  | 110 |  |  |  | 9.0 | 1400, 980, 1100, 1100, 1000, 1200 | 130, 160, 160, 140, 140, 170 |
| Example 8 | 350 | 65 |  |  | 110 |  |  |  | 9.0 | 1100, 860, 860, 780 | 240, 220, 230, 230 |
| Example 9 | 350 |  | 19 |  |  | 140 |  |  |  | 730, 750, 740, 740, 710 | 80, 90, 80, 90, 90 |
| Example 10 | 350 |  | 100 |  |  | 150 |  |  | 9.0 | 510, 500, 500, 980, 510 | 60, 50, 50, 90, 60 |
| Example 11 | 350 |  |  | 100 |  |  | 150 |  | 9.0 | 550, 570, 570, 570 | 150, 150, 130, 140 |
| Example 12 | 350 | 65 |  |  |  |  |  | 57 |  | 930, 870, 1400, 1300 | 150, 140, 160, 150 |
| Comparative Example | 350 | 65 |  |  |  |  |  |  |  | 1400, 1400, 1200, 1900, 1100 | 170, 170, 150, 160, 130 |

In the present example, an yttrium-based heat-resistant adhesive was applied to the slits of a water-cooled copper crucible (inner diameter: 62 mm, depth: 130 mm) in the cold crucible induction melting furnace. After the heat-resistant adhesive was applied, 350 g of titanium (Ti), 2 to 65 g of yttrium (Y), and 110 g of yttrium fluoride (YF$_3$) were charged into the water-cooled copper crucible.

In some experiments, to set an initial concentration of oxygen in titanium to 1% by mass (10000 mass ppm), 9 g of titanium oxide (TiO$_z$) was also charged. A temperature was raised in an argon atmosphere, and after it was visually confirmed that all samples were melted, the temperature was maintained for 10 to 20 minutes. Thereafter, an output of the furnace was lowered to perform air cooling, and the metal sample was taken out.

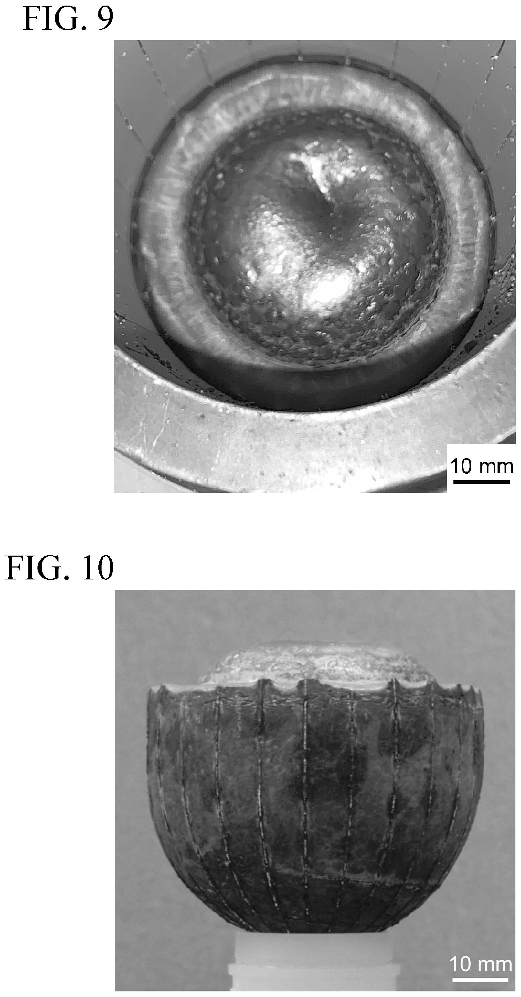

FIG. 9 is a photograph of a titanium sample in the water-cooled copper crucible, which was obtained by directly removing oxygen from molten titanium by using the cold crucible induction melting furnace and cooling and solidifying the molten titanium in Example 1 of Table 1.

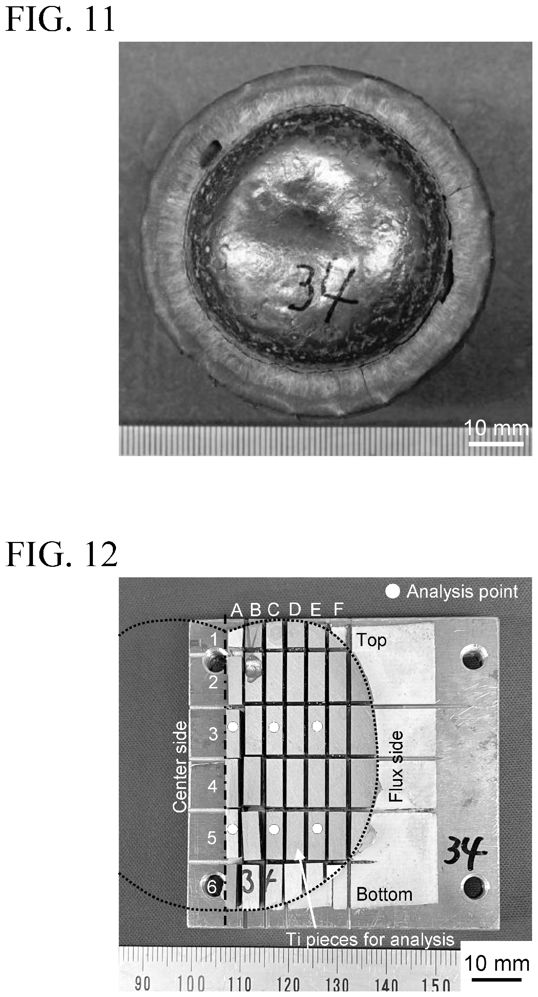

FIGS. 10 and 11 are photographs (appearance) of the titanium sample taken out from the water-cooled copper crucible after directly removing oxygen from molten titanium by using the cold crucible induction melting furnace and cooling and solidifying the molten titanium in Example 1 of Table 1.

FIG. 12 is a photograph of a titanium sample piece for analysis, which was cut out from the obtained titanium sample in Example 1 of Table 1.

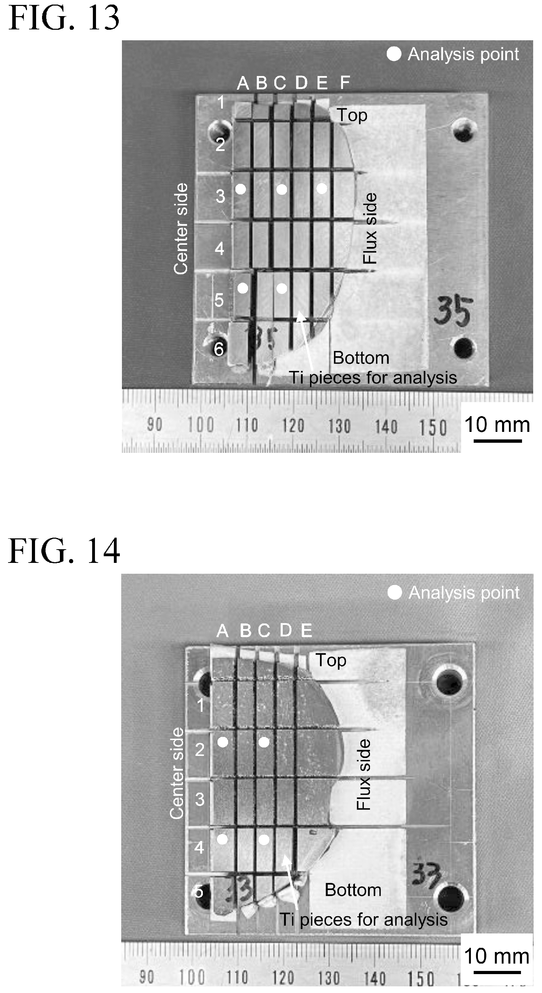

FIG. 13 is a photograph of a titanium sample piece for analysis cut out from the obtained titanium sample in Example 2 of Table 1.

FIG. 14 is a photograph of a titanium sample piece for analysis cut out from the obtained titanium sample in Example 8 of Table 1.

In a case where titanium was melted under the conditions of Example 1 in Table 1, a metal sample having an extremely low oxygen concentration of 0.011% by mass to 0.023% by mass (110 to 230 mass ppm) was obtained. As can be seen from analysis locations of the sample shown in FIG. 12, the oxygen concentration was reduced to 0.02% by mass (200 mass ppm) in the entire region of the sample, and the results were well consistent with a thermodynamic prediction. In addition, it can be seen that deoxidation proceeds uniformly over the entire region of the sample. In this case, a nitrogen concentration in the metal sample was 0.012% by mass to 0.015% by mass (120 to 150 mass ppm), and an yttrium concentration was approximately 2% by mass. In general, even in a case of using a Kroll process of producing high-purity titanium via a chloride, it is difficult to obtain titanium having a low oxygen concentration of 0.02% by mass (200 mass ppm) or less, and thus experimental results are noteworthy.

In a case where titanium was melted under conditions of Example 2 in Table 1, a metal sample having a low oxygen concentration of approximately 0.06% by mass (600 mass ppm) was obtained. As can be seen from analysis locations of the sample shown in FIG. 13, the oxygen concentration was reduced to 0.06% by mass (600 mass ppm) in the entire region of the sample. In this case, an yttrium concentration in the metal sample was 1% by mass or less. It has been revealed that oxygen can be removed to a concentration of approximately 0.1% by mass (1000 mass ppm) while suppressing the mixing of yttrium into titanium.

In a case where titanium was melted under conditions of Examples 3, 4, and 5 in Table 1, a metal sample having an oxygen concentration of 0.1% by mass (1000 mass ppm) or less was obtained.

As in melting experiments of Examples 6, 7, 8, 10, and 11 in Table 1, even in an experiment in which a titanium oxide ($TiO_2$) was intentionally added to set an initial concentration of oxygen in titanium to 1% by mass (10000 mass ppm), oxygen was removed from molten titanium to 0.1% by mass (1000 mass ppm). As can be seen from analysis locations of the sample shown in FIG. 14, in Example 8 of Table 1, the oxygen concentration was reduced to approximately 0.1% by mass (1000 mass ppm) in the entire region of the sample. It is a noteworthy result that even in a case where a large amount of an oxide is intentionally added to the titanium sample, impurity oxygen can be reduced up to 0.1% by mass (1000 mass ppm) by using the method of the above-described embodiment.

As in melting experiments of Examples 9 to 11 in Table 1, it was confirmed that even in a case where a rare earth metal was changed to lanthanum (La) and cerium (Ce), titanium having a low oxygen concentration equivalent to that in a case where yttrium (Y) was used was obtained.

On the other hand, in a case where the deoxidation treatment was performed without using the rare earth metal halide salt as in a melting experiment of Comparative Example in Table 1, it was not possible to obtain a metal sample having a low oxygen concentration of 0.1% by mass (1000 mass ppm) or less.

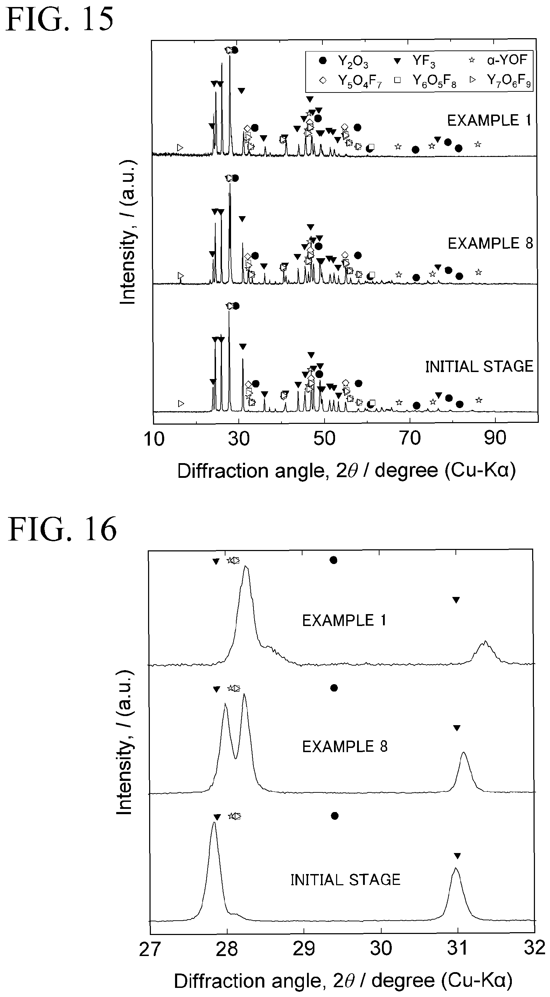

FIGS. 15 and 16 are X-ray diffraction measurement results of an yttrium fluoride ($YF_3$) flux used for deoxidizing the titanium sample. In the flux after the experiment, formation of an yttrium oxyfluoride ($Y_xO_yF_z$) was confirmed, whereas an yttrium oxide ($Y_2O_3$) was not detected.

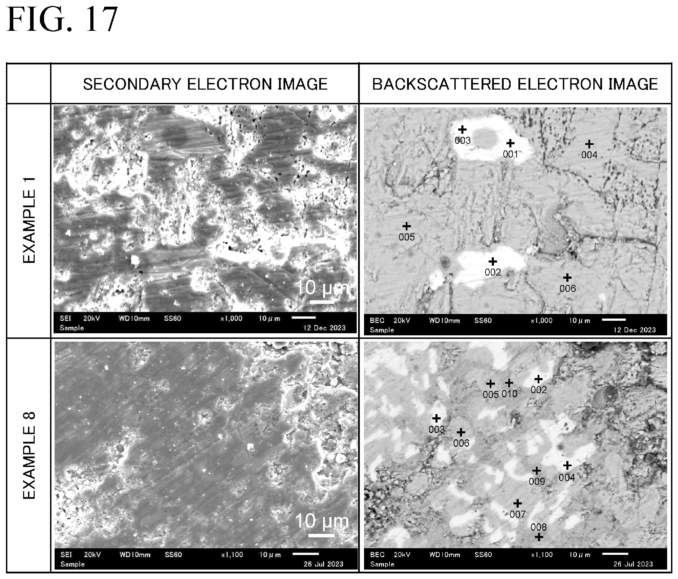

FIG. 17 is a scanning electron micrograph of an yttrium fluoride flux used for deoxidation of the titanium sample. Table 2 shows results of energy dispersive X-ray spectroscopy at points shown in a scanning electron micrograph of FIG. 17. In the flux after the experiment, a metal yttrium (Y) phase, an yttrium oxyfluoride phase, and an yttrium fluoride phase were detected, whereas an yttrium oxide phase was not detected. From the above results, it is suggested that removal of oxygen from titanium has progressed by the reaction shown in Formula (1) under the conditions of the embodiment.

[Table 2]

|  |  | Analysis point | Y (mol%) | O (mol%) | F (mol%) | Phase |
|---|---|---|---|---|---|---|
| Example 1 |  | 001 | 86.7 | 10.7 | 2.6 | Metal yttrium |
|  |  | 002 | 89.0 | 8.5 | 2.5 |  |
|  |  | 003 | 86.0 | 11.1 | 2.8 |  |
|  |  | 004 | 41.4 | 2.8 | 55.8 | Yttrium fluoride |
|  |  | 005 | 42.0 | 2.4 | 55.6 |  |
|  |  | 006 | 43.2 | 2.1 | 54.7 |  |
| Example 8 |  | 002 | 88.2 | 9.9 | 1.9 | Metal yttrium |
|  |  | 003 | 84.8 | 10.3 | 4.9 |  |
|  |  | 004 | 85.9 | 11.6 | 2.5 |  |
|  |  | 005 | 48.2 | 19.6 | 32.3 | Yttrium oxyfluoride |
|  |  | 006 | 48.1 | 19.0 | 32.9 |  |
|  |  | 007 | 48.9 | 21.5 | 29.6 |  |
|  |  | 008 | 38.6 | 5.8 | 55.5 | Yttrium fluoride |
|  |  | 009 | 43.9 | 7.3 | 48.8 |  |

(continued)

|  | Analysis point | Y (mol%) | O (mol%) | F (mol%) | Phase |
|---|---|---|---|---|---|
|  | 010 | 41.3 | 5.3 | 53.4 |  |

From the above results, it can be seen that titanium having a low oxygen concentration can be produced by removing oxygen from ATR-Ti or MTR-Ti having a high oxygen concentration. In addition, by removing oxygen from titanium scraps having a high oxygen concentration, it is possible to reuse the titanium scraps. After any of the experiments, the nitrogen concentration in the metal sample was approximately 0.02% by mass (200 mass ppm), and the amount of nitrogen mixed in due to addition of the rare earth metal or the flux was also negligible.

It has also been clarified that the oxygen concentration in titanium can be controlled to a low value by adjusting the yttrium concentration, that is, the addition amount of the rare earth metal.

As is clear from the above examples, in a case where the method for producing titanium or a titanium alloy according to the above-described embodiment is used, it is possible to directly produce titanium or a titanium alloy having a low oxygen concentration of 0.1% by mass (1000 mass ppm) or less without via a chloride, which has not been achieved by the melting technique in the conventional art.

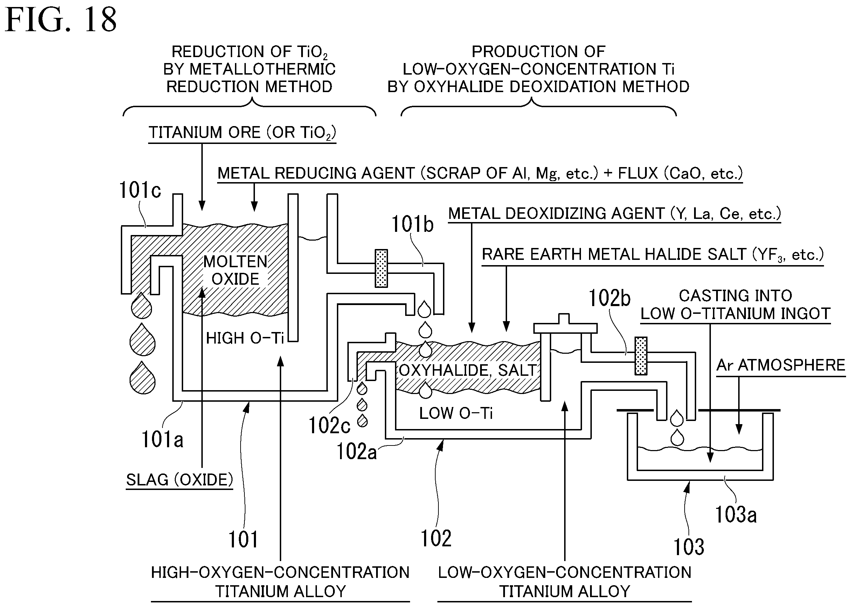

FIG. 18 is an example of a conceptual diagram of a new titanium smelting method of producing titanium or a titanium alloy directly from a titanium oxide ($TiO_2$) by using the production method of the above-described embodiment.

As shown in FIG. 18, in the new smelting method, a first apparatus 101 for reducing a titanium oxide, a second apparatus 102 for deoxidizing titanium, and a third apparatus 103 for casting low-oxygen titanium are coupled and used in this order.

The first apparatus 101 includes a reaction container 101a, a titanium discharge portion 101b, and a slag discharge portion 101c. The second apparatus 102 includes a reaction container 102a, a titanium discharge portion 102b, and a slag discharge portion 102c. The third apparatus 103 includes a mold 103a.

A titanium ore or a titanium oxide, a metal reducing agent such as aluminum (Al) or magnesium (Mg), and a flux such as a calcium oxide (CaO) are charged into the reaction container 101a of the first apparatus 101. Titanium ore or a titanium oxide in the reaction container 101a is reduced by the metal reducing agent, and titanium having a high oxygen concentration is generated.

The titanium discharge portion 101b of the first apparatus 101 is a pipe extending from a side surface of the reaction container 101a to the reaction container 102a of the second apparatus 102. A distal end of the titanium discharge portion 101b is open on an opening portion of the reaction container 102a. Molten titanium having a high oxygen concentration produced by the first apparatus 101 is supplied to the reaction container 102a of the second apparatus 102 through the titanium discharge portion 101b.

The slag discharge portion 101c of the first apparatus 101 is a pipe extending from an upper part of the side surface of the reaction container 101a to the outside. Slag generated by the first apparatus 101 is discharged to the outside of the reaction container 101a through the slag discharge portion 101c and is collected.

A rare earth metal such as yttrium (Y), lanthanum (La), or cerium (Ce), and a rare earth metal halide salt such as an yttrium fluoride ($YF_3$) are charged into the reaction container 102a of the second apparatus 102 in combination with the molten titanium having a high oxygen concentration supplied from the first apparatus 101. In the reaction container 102a, impurity oxygen from the molten titanium is removed by using a formation reaction of the rare earth metal oxyhalide, and titanium having a low oxygen concentration is produced.

The titanium discharge portion 102b of the second apparatus 102 is a pipe extending from a side surface of the reaction container 102a to a casting mold 103a of the third apparatus 103. A distal end of the titanium discharge portion 102b is open on an opening portion of the mold 103a. Molten titanium having a low oxygen concentration produced by the second apparatus 102 is supplied to the casting mold 103a of the third apparatus 103 through the titanium discharge portion 102b.

The slag discharge portion 102c of the second apparatus 102 is a pipe extending from an upper part of the side surface of the reaction container 102a to the outside. Slag generated in the second apparatus 102 is discharged to the outside of the reaction container 102a through the slag discharge portion 102c and is collected.

By casting in the third apparatus 103, a titanium ingot having a low oxygen concentration can be obtained from molten titanium having a low oxygen concentration.

By using the new smelting method shown in FIG. 18, it is possible to produce titanium or a titanium alloy having a low oxygen concentration directly from a titanium oxide without via a chloride.

REFERENCE SIGNS LIST

1 Water-cooled copper crucible
2 Slit and heat-resistant adhesive
3 Induction coil
4 Water cooling mechanism
5: Metal sample
6 Flux
S11, S21 First step
S12, S22 Second step
S13, S23 Third step
S14 Fourth step

**Claims**

1. A method for producing titanium or a titanium alloy,
   wherein titanium (Ti) or a titanium alloy is melted and reacted in combination with a rare earth metal and a rare earth metal halide salt to produce titanium or a titanium alloy with an oxygen concentration of 0.1% by mass (1000 mass ppm) or less.

2. A method for producing titanium or a titanium alloy,
   wherein impurity oxygen in molten titanium or a molten titanium alloy is directly removed by using deoxidation ability of a rare earth metal and a formation reaction of a rare earth metal oxyhalide to produce titanium or a titanium alloy having a low oxygen concentration.

3. The method for producing titanium or a titanium alloy according to any one of Claims 1 and 2,
   wherein the titanium alloy is an alloy having a titanium mass concentration of 65% or more.

4. The method for producing titanium or a titanium alloy according to any one of Claims 1 and 2,
   wherein one or more rare earth metals selected from yttrium (Y), cerium (Ce), and lanthanum (La), and one or more rare earth metal halide salts selected from an yttrium fluoride ($YF_3$), a cerium fluoride ($CeF_3$), and a lanthanum fluoride ($LaF_3$) are used.

5. The method for producing titanium or a titanium alloy according to any one of Claims 1 and 2,
   wherein a flux of a metal halide salt is used in addition to the rare earth metal and the rare earth metal halide salt.

6. The method for producing titanium or a titanium alloy according to any one of Claims 1 and 2,
   wherein titanium or a titanium alloy, which contains a large amount of impurity oxygen and is produced by reducing a titanium oxide with aluminum (Al) or magnesium (Mg), is used as a titanium raw material.

7. The method for producing titanium or a titanium alloy according to any one of Claims 1 and 2,
   wherein titanium or a titanium alloy, which contains a large amount of impurity oxygen and is produced by reducing a titanium oxide with a rare earth metal or a rare earth metal alloy, is used as a titanium raw material.

8. The method for producing titanium or a titanium alloy according to any one of Claims 1 and 2,
   wherein scraps of titanium or a titanium alloy are used as a titanium raw material.

9. The method for producing titanium or a titanium alloy according to Claim 1,
   wherein the titanium and the titanium alloy are melted with a metal halide salt that lowers a melting point of a halide salt melt in addition to the rare earth metal and the rare earth metal halide salt.

10. The method for producing titanium or a titanium alloy according to any one of Claims 1 and 2,
    wherein an addition amount of the rare earth metal is adjusted to control an oxygen concentration in titanium.

11. The method for producing titanium or a titanium alloy according to any one of Claims 1 and 2,
    wherein the titanium and the titanium alloy are melted in combination with the rare earth metal and the rare earth metal halide salt in an inert atmosphere by using a melting apparatus selected from a high-frequency induction heating apparatus, a plasma arc melting apparatus, and an electron beam melting apparatus.

**12.** The method for producing titanium or a titanium alloy according to Claim 11,

wherein a cold crucible induction melting furnace is used as the high-frequency induction heating apparatus, and a heat-resistant adhesive is applied to a slit of a crucible of the cold crucible induction melting furnace to prevent fixation between the rare earth metal halide salt and the crucible.

## FIG. 1

```
              AUXILIARY REACTION    METAL REDUCING
 Ti ORE(s)        AGENT(s)            AGENT(s,l)
     │ (TiO₂)         │                   │ (Al,Mg,etc.)
     ▼                ▼                   ▼
 ┌─────────────────────────────────────────────────┐
 │            REDUCTION OF TiO₂ BY                    │
 │         METALLOTHERMIC REDUCTION METHOD           │
 └─────────────────────────────────────────────────┘
```

Figure 1 flow diagram.

S11 — REDUCTION OF $TiO_2$ BY METALLOTHERMIC REDUCTION METHOD

HIGH-OXYGEN-CONCENTRATION Ti ALLOY(s,l) → SLAG(OXIDE)(l)

RARE EARTH METAL HALIDE SALT(s) ($YF_3$,etc.)   RARE EARTH METAL(s,l) (Y,La,Ce,etc.)

S12 — NEW TITANIUM DEOXIDATION METHOD USING FORMATION OF OXYHALIDE

LOW-OXYGEN-CONCENTRATION Ti ALLOY(s,l)   OXYHALIDE SALT(l)

S13 — CASTING AND ROLLING

S14 — RARE EARTH ELEMENT RECYCLING AND REUSING

LOW-COST Ti ALLOY(s)

## FIG. 2

HIGH-OXYGEN-CONCENTRATION Ti OR Ti ALLOY SCRAPS(s)

RARE EARTH METAL HALIDE SALT(s) ($YF_3$,etc.)   RARE EARTH METAL(s,l) (Y,La,Ce,etc.)

S21 — NEW TITANIUM DEOXIDATION METHOD USING FORMATION OF OXYHALIDE

LOW-OXYGEN-CONCENTRATION Ti ALLOY(l,s)   OXYHALIDE SALT(l)

S22 — CASTING AND ROLLING

S23 — RARE EARTH ELEMENT RECYCLING AND REUSING

LOW-COST Ti OR Ti ALLOY(s)

## FIG. 3

## FIG. 4

# FIG. 5

Legend:
- ---☆--- Y/YOF/YF$_3$ eq.
- ---○--- Y/Y$_2$O$_3$ eq.
- ---●--- Y/YOCl/YCl$_3$ eq.
- ---*--- Ca/CaO eq.
- ---□--- Mg/MgO eq.

Vertical left axis: Oxygen concentration in Ti, log [O]$_{Ti}$ (mass%)

Vertical right axis: Oxygen concentration in Ti, $C_O$ (mass ppm)

Horizontal axis: Partial pressure of oxygen, log $p_{O_2}$ (atm)

Line labels: 1200 K, 1300 K, 1400 K, 1500 K, 1600 K, 1800 K, 2000 K

◯ : DEOXIDATION CONDITIONS OF EMBODIMENT

FIG. 6

FIG. 7

# FIG. 8

FIG. 9

10 mm

FIG. 10

10 mm

FIG. 11

10 mm

FIG. 12

## FIG. 13

## FIG. 14

## FIG. 15

## FIG. 16

FIG. 17

| | SECONDARY ELECTRON IMAGE | BACKSCATTERED ELECTRON IMAGE |
|---|---|---|
| EXAMPLE 1 | | |
| EXAMPLE 8 | | |

# FIG. 18

REDUCTION OF $TiO_2$ BY METALLOTHERMIC REDUCTION METHOD

PRODUCTION OF LOW-OXYGEN-CONCENTRATION Ti BY OXYHALIDE DEOXIDATION METHOD

TITANIUM ORE (OR $TiO_2$)

METAL REDUCING AGENT (SCRAP OF Al, Mg, etc.) + FLUX (CaO, etc.)

METAL DEOXIDIZING AGENT (Y, La, Ce, etc.)

RARE EARTH METAL HALIDE SALT ($YF_3$, etc.)

CASTING INTO LOW O-TITANIUM INGOT

Ar ATMOSPHERE

101c

101b

102b

MOLTEN OXIDE

HIGH O-Ti

OXYHALIDE, SALT

LOW O-Ti

101a

102c

102a

103a

SLAG (OXIDE)

101

HIGH-OXYGEN-CONCENTRATION TITANIUM ALLOY

102

LOW-OXYGEN-CONCENTRATION TITANIUM ALLOY

103

EP 4 748 952 A1

## INTERNATIONAL SEARCH REPORT

| International application No. |
|---|
| **PCT/JP2024/015012** |

| A. | CLASSIFICATION OF SUBJECT MATTER |
|---|---|

***C22B 34/12***(2006.01)i; ***C22B 7/00***(2006.01)i; ***C22B 9/10***(2006.01)i
FI:  C22B34/12 102; C22B7/00 F; C22B9/10 101; C22B34/12 103

According to International Patent Classification (IPC) or to both national classification and IPC

| B. | FIELDS SEARCHED |
|---|---|

Minimum documentation searched (classification system followed by classification symbols)

C22B5/02-5/20; C22B7/00; C22B9/10; C22B34/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | IIZUKA Akihiro, OUCHI Takanari, OKABE Toru, Development of a New Titanium Powder Sintering Process with Deoxidation Reaction Using Yttrium Metal, Materials Transactions, vol. 61, no. 4, 2020, pp. 758-765, <DOI: 10.2320/matertrans.MT-M2019340> | 1-12 |
| A | KAMIMURA Gen, OUCHI Takanari, OKABE Toru, Deoxidation of Titanium Using Cerium-Chloride Flux for Upgrade Recycling of Titanium Scraps, Materials Transactions, 2022, vol. 63, no. 6, pp. 893-902, <DOI: 10.2320/matertrans.M-M2022805> | 1-12 |

☐ Further documents are listed in the continuation of Box C.   ☐ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 June 2024** | **25 June 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023117129 A
- JP 2949222 B

- JP 2016135907 A

**Non-patent literature cited in the description**

- **AKIHIRO IIZUKA** ; **TAKANARI OUCHI** ; **TORU H. OKABE**. Ultimate Deoxidation Method of Titanium Utilizing Y/YOCl/YCl3 Equilibrium. *Metall. Mater. Trans. B*, 2020, vol. 51, 433-442

- **LI-NA JIAO** ; **QI-SHENG FENG** ; **SHI-YU HE** ; **BAO-HUA DUAN** ; **ZHI-HE DOU** ; **CHONG-HE LI** ; **XIONG-GANG LU**. Direct oxygen removal from titanium aluminide scraps by yttrium reduction. *Trans. Non-ferrous Met. Soc. China*, 2022, vol. 32, 2428-2437
- **SEUNGJOO BAEK** ; **IN-HO JUNG**. *J. Eur. Ceram. Soc.*, 2022, vol. 42, 5079-5092